Europäisches Patentamt

European Patent Office

Office européen des brevets

(11) Veröffentlichungsnummer: **0 320 857**
**A2**

## (12) EUROPÄISCHE PATENTANMELDUNG

(21) Anmeldenummer: 88120754.2

(22) Anmeldetag: 13.12.88

(51) Int. Cl.⁴: **F16H 39/44**

(30) Priorität: 16.12.87 DE 3742569

(43) Veröffentlichungstag der Anmeldung:
21.06.89 Patentblatt 89/25

(84) Benannte Vertragsstaaten:
DE ES FR GB IT NL SE

(71) Anmelder: **FIRMA GERHARD KLEMM MASCHINENFABRIK GMBH & CO.**
**Friedrich-Hagmann-Strasse 64**
**D-4800 Bielefeld 17(DE)**

(72) Erfinder: **Otte, Erhard**
**Kleiner Bruchweg 31**
**D-4980 Bünde 1(DE)**

(54) Hydromechanische Antriebsübertragungsvorrichtung, wie Kupplung, Getriebe oder dgl.

(57) Hydromechanische Antriebsübertragungsvorrichtung, wie Kupplung, Getriebe od. dgl.

Die Erfindung betrifft eine hydromechanische Antriebsübertragungsvorrichtung, die als Kupplung und auch als Getriebe ausgebildet sein kann. Diese Vorrichtung hat eine zentrale Steuerung 8 in die alle wesentlichen Parameter der Vorrichtung während ihres Betriebes eingegegeben werden, wie Antriebs- und Abtriebsdrehgeschwindigkeiten, der Druck im hydraulischen Mittel und gegebenenfalls die Stellung die ein oder mehrere Stellglieder der hydromechanischen Pumpe(n) in der Vorrichtung hat bzw. haben. Die Steuerung gibt die notwendigen Einstellsignale zu Stellgliedern (7,7a,7b,7') vorzugsweise über eines Servoventilverstellvorrichtung oder Servoverstellvorrichtung(en).

Fig.3

## Hydromechanische Antriebübertragungsvorrichtung, wie Kupplung, Getriebe oder dgl.

Die Erfindung betrifft eine hydromechanische Antriebübertragungsvorrichtung, wie Kupplung, Getriebe oder dgl. entsprechend dem Oberbegriff des Anspruches 1.

Der Oberbegriff geht aus von der DE AS 19 45 440, in der ein hydrostatisches Axialkolbengetriebe mit innerer Leistungsverzweigung dargestellt und beschrieben ist. Bei diesem hydrostatischen Axialkolbengetriebe wird die Getriebeausgangswelle über ein schaltbares Vorgelege, wahlweise entweder mit der Antriebswelle oder dem Umlaufgehäuse verbunden und außerdem die Abtriebswelle sowie das Umlaufgehäuse mit je einer willkürlich tätigbaren Bremse versehen. Abgesehen davon, daß die Bremsen starke Verschleißkörper sind, ist durch die Verstellung des Vorgeleges die Vorrichtung nur in eine "entweder-oder" Stellung schaltbar, so daß die Differenziertheit bei der Übertragung des Drehmomentes lediglich über die Bremsen erzielbar ist.

Weiterhin ist ein Ausgleichsgetriebe durch das DE GM 74 25 346 vorbekannt, das gekennzeichnet ist durch einen hydrostatischen Motor insbesondere eine Radialkolbenmaschine mit einem Eingang und einem Ausgang für das hydraulische Druckmittel, bei dem sowohl das Gehäuse als auch der Rotor drehbar sind, wobei das eine drehbare Teil dem mechanischen Drehantrieb und das andere drehbare Teil mit der Abtriebswelle des Getriebes verbunden ist. Zu beiden drehbaren Teilen wird die Hydraulik d.h. die Druckquelle und die dem hydraulischen Motor zugeführte Druckflüssigkeit als variabler Parameter zugeführt. Als Druckquelle ist eine Hydropumpe mit veränderlicher Fördermenge vorgesehen, die die Drehzahl des hydrostatischen Motors bestimmt, wenn das Ausgleichsgetriebe zur Überlagerung einer Grunddrehzahl herangezogen werden soll. Die Zu- und Ableitungen für die Druckflüssigkeit werden mittels eines Drehgelenkes an das Zylinderzentrum angeschlossen. Im Ganzen ist aber die Zu- und Abführung der Druckflüssigkeit ein offenes System, angetrieben von einer Axialkolbenpumpe und mit einem Überdruckventil versehen. Die Druckflüssigkeit wird von einem Behälter eingespeist und in einen Behälter zurückgegeben.

Der Nachteil dieser Vorrichtung besteht darin, daß das hydraulische System nur eine Zusatzfunktion hat und die Gesamtvorrichtung somit, von diesem hydraulischen System her gesehen, nicht exakt über den gesamten Drehbereich steuerbar ist.

Der vorliegenden Erfindung liegt somit die Aufgabe zugrunde, eine Antriebübertragungsvorrichtung wie Kupplung, Getriebe oder dgl. zu schaffen, bei der im wesentlichen das hydraulische Mittel, seine exakt differenzierte Blockierung bzw. exakte Freigabe in der Zu- und Abführung und/oder in der Führung innerhalb der Vorrichtung gesteuert ist und dadurch die Drehmomentübertragung, zentral überwacht steuerbar und an sämtliche Arbeitsgegebenheiten anpaßbar ist, mit der gegebenen Möglichkeit der Kontrolle und der automatischen Einstellung aller gewünschten Parameter. Die Vorrichtung soll sich sowohl als Pumpe als auch als Getriebe ausbilden lassen.

Erfindungsgemäß sind zur Lösung dieser Aufgabe, die im Anspruch 1 genannten Merkmale vorgesehen.

Der erhebliche Vorteil des Erfindungsgegenstandes gegenüber dem Stand der Technik besteht darin, daß ein direkter Zusammenhang zwischen dem Volumenstrom des hydraulischen Mittels, der Stellung des Stellgliedes z.B. des einstellbaren Ventiles bei der Pumpe oder einer Servoverstellvorrichtung für die Pumpe z.B. beim Getriebe und dem zu übertragenden Drehmoment besteht.

Daraus ergibt sich die vorteilhafte Möglichkeit, daß das jeweils von der Vorrichtung zu übertragende Drehmoment der jeweiligen Antriebssituation angepaßt werden kann. Dies kann bedeuten, daß die Kennlinie z.B. der Kupplung, der Kennlinie des Antriebsmotors während des Kupplungsvorganges angepaßt werden kann und zwar, vorteilhafterweise automatisch. Das jeweils zu übertragende Drehmoment entspricht somit genau dem maximalen Drehmoment, welches der Antriebsmotor bei der jeweiligen Drehgeschwindigkeit abzugeben vermag. Dies reguliert den Treibstoffverbrauch, das Emissionsverhalten und auch die Lärmentwicklung im Bezug auf den Antriebsmotor.

Ein weiterer sehr wesentlicher Gedanke der Erfindung besteht darin, daß z.B. die Eingangsdrehgeschwindigkeit gemessen wird, der Innendruck der Vorrichtung also des hydraulichen Mittels und ggf. die Stellung des Stellgliedes, z.B. eines einstellbaren Ventiles, wobei die Meßwerte durch eine entsprechend programmierte vorzugsweise elektronische Steuerung verarbeitet werden, um dem Stellglied entsprechende Stellbefehle zu vermitteln. Dabei besteht noch die Möglichkeit, auch die Einstellung beispielsweise eines oder zweier Gleit-, Führungs- und Druckelemente in der Vorrichtung mitzumessen und in der Steuervorrichtung mitzuverarbeiten bzw. von der Steuervorrichtung beeinflussen zu lassen.

Vorteilhafte und bevorzugte Weiterbildungen der Erfindung sind in den Unteransprüchen angegeben.

In den Zeichnungen sind Ausführungsbeispiele der Erfindung dargestellt.

Es zeigen:

Fig. 1 Eine schematische Anordnung des Einsatzes und des Aufbaues des Erfindungsgegenstandes, beim Beispiel einer hydromechanischen Antriebsübertragungsvorrichtung in Form einer Kupplung,

Fig. 2 eine Kupplung im Schnitt,

Fig. 3 das Ausführungsbeispiel eines erfindungsgemäß ausgebildeten Getriebes, in Draufsicht, im Schnitt,

Fig. 4 das Ausführungsbeispiel der Fig. 3 in Vorderansicht, teilweise geschnitten,

Fig. 5 und 6 zwei weitere Ausführungsbeispiele des Erfindungsgegenstandes in Draufsicht im Schnitt.

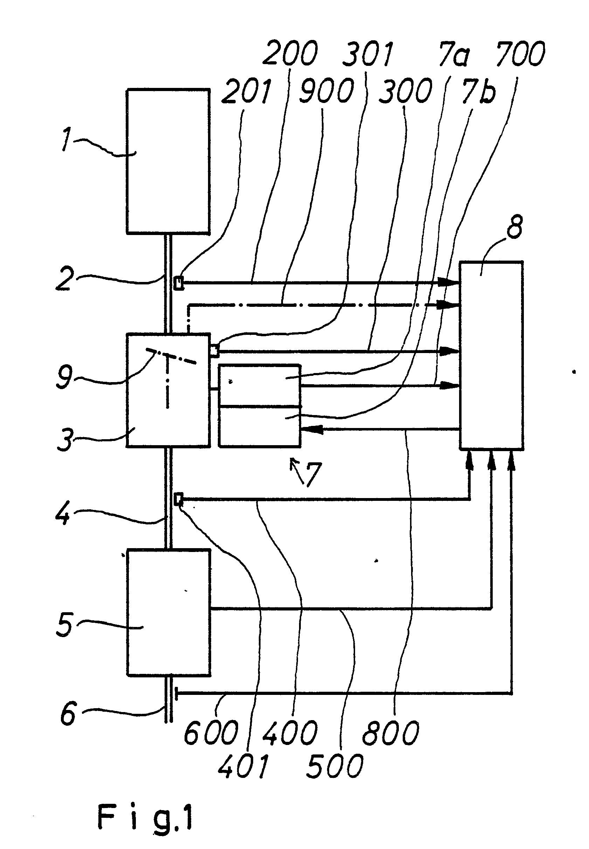

In Figur 1 ist der Grundgedanke des Erfindungsgegenstandes in einem Schema dargestellt. Dieses Schema zeigt die Verwendung einer hydromechanischen Antriebsübertragungsvorrichtung als Kupplung.

Ein beliebiger Verbrennungsmotor 1 ist mit seiner Welle 2, die auch gleichzeitig Antriebswelle für die nachgeschaltete Kupplung 3 ist, über diese Kupplung und deren Ausgangswelle 4 mit einem Getriebe 5 verbunden, dessen Abtriebswelle 6 zu einer beliebigen Vorrichtung gehen kann. Als angetriebene Vorrichtung kann ein Fahrzeug bzw. eine Maschine jeglicher Art denkbar sein.

Die Kupplung 3 ist bei dem dargestellten Ausführungsbeispiel eine hydromechanische Antriebsübertragungsvorrichtung in der ein hydraulisches Mittel umläuft, bzw. in seinem Umlauf behindert wird. Die Freigabe bzw. die Regelung der jeweiligen Durchflußmenge erfolgt durch ein Stellglied 7, das beim dargestellten Ausführungsbeispiel der Kupplung 3 zugeordnet ist. Dieses Stellglied 7, das wie ein Ventil ausgebildet sein kann, erhält seinen Stellbefehl von einer vorzugsweise elektronisch ausgebildeten Steuerung 8 her, über eine Leitung 800, wobei die Steuerung selbst über die unterschiedlichsten Leitungen, Meßwerte aus der Gesamtanlage erhält und verarbeitet. So wird die Drehzahl der Antriebswelle 2 über die Leitung 200 in die Steuerung eingegeben, der Flüssigkeitsinnendruck aus der Kupplung 3 über die Leitung 300. Die Stellung des Stellgliedes 7, wird der Steuerung über die Leitung 700 eingegeben, die Drehgeschwindigkeit der Ausgangswelle 4 über die Leitung 400 und die Schaltstellung des Getriebes 5 über die Leitung 500.

Falls sich in der hydromechanischen Antriebsübertragungsvorrichtung beispielsweise eine Einstellmöglichkeit für Kolben oder andere Druckelemente, z.B. ein in der Figur 1 angedeutetes Gleit-, Führungs-, und Druckelement befindet, so könnte die Einstellung dieses möglichen Druckelementes 9 über eine Leitung 900 in die Steuerung eingegeben werden; außerdem können noch Werte von der Abtriebswelle 6 des Getriebes 5 in der Steuerung 8 verarbeitet werden. Dies ist durch Anordnung der Leitung 600 dargestellt. Wird auch das Getriebe als hydromechanische Antriebsübertragungsvorrichtung ausgebildet, was durchaus möglich ist, so muß diesem Getriebe ein weiteres Stellglied zugeordnet werden, wie z.B. das Stellglied 7 zur Kupplung 3 und es müssen dann auch die Leitungen 300, 700 und 800 in equivalenter Form vorgesehen werden.

Das Stellglied 7 kann sich aufteilen in je einen Teil 7a und 7b, wobei 7a das eigentliche Ventil darstellt und 7b z.B., eine Servoventilverstellvorrichtung. Der Stellbefehl läuft dann zur Servoventilverstellvorrichtung 7b, die das Ventil 7a einstellt, das seinerseits den Umlauf, also den Steuerkreislauf des hydraulischen Mittels beeinflußt. Die Leitung 700 kann somit entweder direkt vom Ventil 7a zur Steuerung 8 laufen oder von der Servoventilverstellvorrichtung 7b aus; beides ist in Figur 1 angedeutet.

Wie bereits beschrieben, besteht ein direkter Zusammenhang zwischen dem Volumenstrom des Druckmittels, der Stellung des Stellgliedes 7, dem Innendruck der Kupplung 3 und dem zu übertragenden Drehmoment.

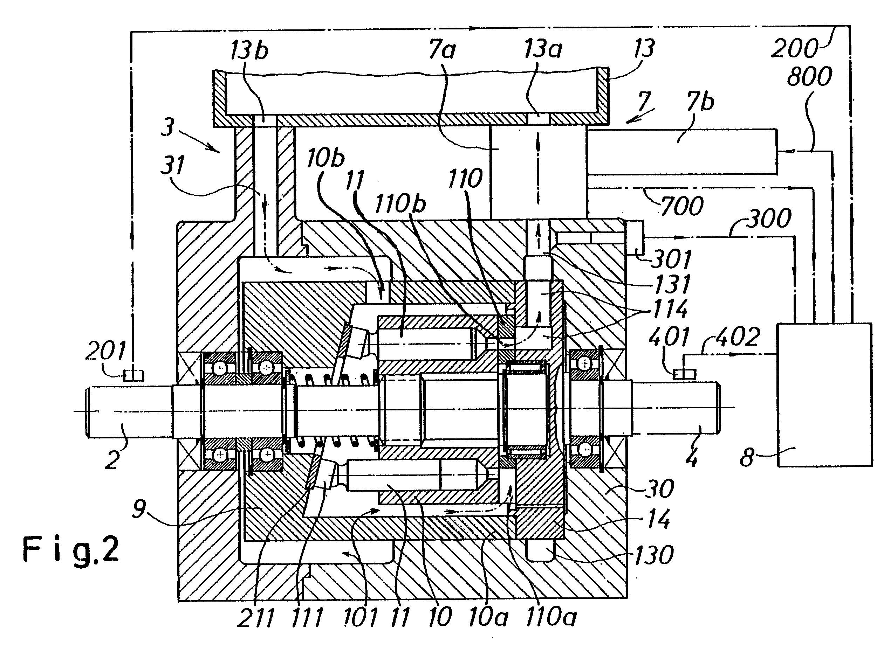

In Figur 2 ist ein Ausführungsbeispiel einer derartigen Kupplung dargestellt. Die Antriebswelle 2 der Kupplung 3 ist drehfest mit einem im Inneren der Vorrichtung liegenden Zylinderblock 10 verbunden. Wird die Antriebswelle 2 angetrieben, dreht sich der Zylinderblock 10 mit. In dem Zylinderblock 10 befinden sich verschiebbare Kolben 11, die als Axialkolben angeordnet sind und die mit Gleitblöcken 111 ausgestattet sind. Diese Gleitblöcke 111 stützen sich auf einer schäggestellten Gleitscheibe 211 ab, die ihrerseits auf einem Druckelement 9 liegt, das stirnseitig eine Einheit mit einem den Zylinderblock 10 umfassenden, umlaufenden Pumpengehäuse 10a bildet. Zylinderblock 10 und die Kolbeneinheit 11, sowie das Pumpengehäuse 10a bilden eine Kolbenpumpe 101, die in einem Kupplungsgehäuse 30 liegt.

Wird die Antriebswelle 2 angetrieben, dreht der Zylinderblock 10 mit und die im Zylinderblock 10 verschiebbaren Kolben 11 werden mitgenommen, die dadurch, daß sie über die Gleitblöcke 111 auf der schräggestellten Gleitscheibe 211 abgestützt sind, während der Drehung der Vorrichtung Hubbewegungen ausführen. Derartige Axialkolbeneinheiten sind in der Grundkonstruktion vorbekannt. Das Druckelement 9 ist bei diesem Ausführungsbeispiel Teil des umlaufenden Pumpengehäuses 10a, das seinerseits in dem Kupplungsgehäuse 30 liegt.

Oberhalb des Kupplungsgehäuses 30 bzw. diesem zugeordnet, befindet sich ein Ölbehälter 13, der auch jedes andere hydraulische Mittel aufnehmen kann, wobei im allgemeinen Öl verwendet wird. Das Öl strömt aus dem Ölbehälter 13 durch entsprechende Öffnungen 13b und 31 in das Kupplungshäuse 30, umgibt das Pumpengehäuse 10a und strömt über eine Öffnung 10b in das Innere desselben.

Der Zylinderblock 10 ist stirnseitig durch eine Ventilplatte 110 abgedeckt, die den Ölfluß über entsprechende Öffnungen 110a zu der Oberfläche der Kolben 11 zuläßt. Diese Ventilplatte 110 gibt den Weg für das Öl od. dgl. frei zu einer Mitnehmerscheibe 14 als Steuerteil, die wiederum über Öffnungen 114 den weiteren Weg des Öles freigibt zu einem Ringkanal 130, der sich im Kupplungsgehäuse 30 befindet. Dieser Ringkanal 130 umschließt die Mitnehmerscheibe 14. Über eine weitere Öffnung 131 ist der Ölfluß zu dem bereits erwähnten Ventil 7a ermöglicht, das seinerseits über eine Öffnung 13a mit dem Ölbehälter 13 verbunden ist; somit strömt das Öl über die Ventilplatte 110 einerseits in die Zylinder und wird andererseits wieder durch die Ventilplatte 110, die Mitnehmerscheibe 14 und den Ringkanal 130 im Kupplungsgehäuse 30, sowie über das Ventil 7a in den Ölbehälter 13 zurückgepumpt. Statt des Ventiles 7a kann jedes andere einsetzbare Stellglied Verwendung finden, so daß die Kupplung das Drehmoment in beiden Drehrichtungen gleichermaßen übertragen kann. Der Innendruck in der Kupplung vor dem Ventil 7a oder Stellglied 7, wird durch den Druckmesser 301 festgestellt und über die Leitung 300 an die Steuerung 8 weitergegeben. Die Antriebsdrehgeschwindigkeit wird über ein Drehzahlmeßgerät 201 und Leitung 200 in die Steuerung eingegeben. Die Abtriebsdrehgeschwindigkeit wird ebenfalls über ein Drehzahlmesser 401 und die Leitung 400 als Meßwert der Steuerung zugeführt. Die Stellung des Ventiles 7a bzw. des Stellgliedes 7 wird durch die Leitung 700 von der Steuerung her gesehen festgestellt. Die gemessenen Werte, die der Steuerung 8 zugeführt worden sind, werden in dieser elektronischen Steuerung verarbeitet und gehen als Ausgangswert in die Servoventilstellung 7b und somit letztlich an das Ventil 7a, das die Durchflußmenge des Druckmittels begrenzt oder freigibt. Wird das Ventil 7a durch die Servoventilverstellvorrichtung 7b ganz oder teilweise geschlossen, kann das Druckmittel nicht mehr frei durchströmen. Das im Kupplungsgehäuse 30 drehbar gelagerte Pumpengehäuse 10a der Kolbenpumpe 101 wird sich entsprechend der Drehgeschwindigkeit der Antriebswelle 2, der Stellung des Ventiles 7a und dem Innendruck zwischen den Kolben 11 und dem Ventil 7a, welcher direkt abhängig ist von dem Widerstand, der der Drehung des Pumpengehäuses entgegensteht, mitdrehen. Die Drehung des Pumpengehäuses 10a wird durch die mit dieser verbundenen Mitnehmerscheibe 14 auf die Ausgangswelle 4 übertragen.

Durch den Einsatz einer entsprechenden beliebigen Kolbenpumpe, im vorliegenden dargestellten Ausführungsbeispiel einer Axialkolbenpumpe, wird erreicht, daß die Durchlaufrichtung des Druckmittels unabhängig ist von der Drehrichtung der Antriebs- und Abtriebswelle und somit gleichbleibt, so daß die Kupplung das Drehmoment in beiden Drehrichtungen gleichermaßen übertragen kann, ohne daß dazu besondere Einrichtungen nötig sind. Der Druckmittel- oder Ölstrom kann zwecks Druckmessung und genauer Steuerung des Volumenstromes aus dem Kupplungsgehäuse herausgeleitet werden. Der Ölbehälter 13 kann aber auch in das Kupplungsgehäuse 30 integriert werden.

Da die für die Wirkung der Kupplung bestimmten Werte, exakt gemessen und der Steuerung 8 zugeführt werden, kann diese entsprechende Stellkommandos an die Servoventilverstellung 7b bzw. an ein anderes Stellglied abgeben, wodurch die Wirkung der Kupplung auf ideale Weise der jeweiligen Antriebssituation angepaßt werden kann.

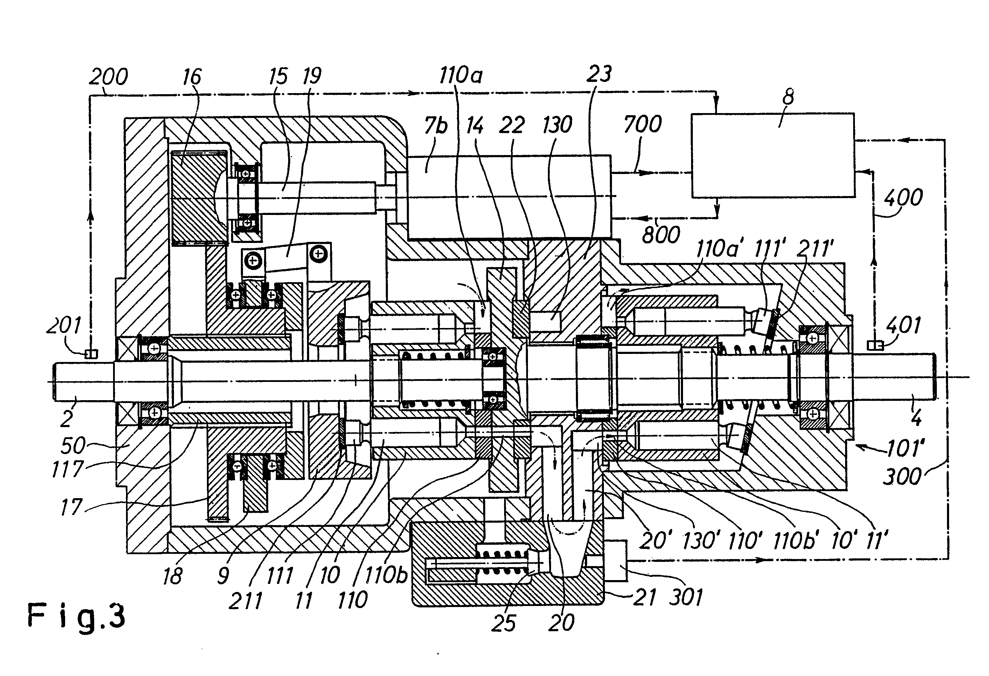

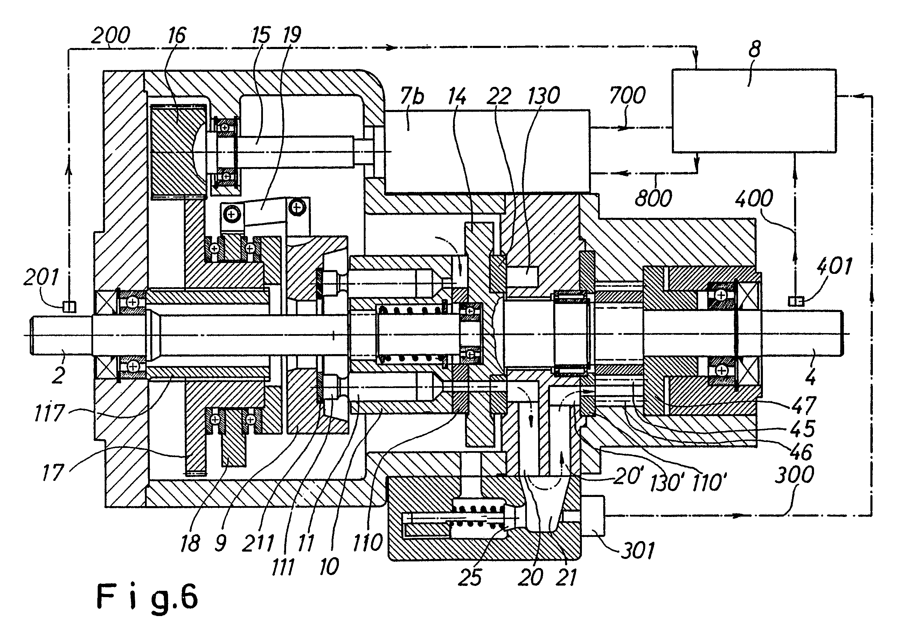

In den Figuren 3 bis 6 sind erfindungsgemäß ausgebildete Getriebe dargestellt, wobei allen Ausführungsbeispielen der Figuren 3 bis 6 das gemeinsam ist, daß das Gehäuse des drehbar angeordneten Pumpenteiles direkt mit dem Antriebsteil des jeweiligen Motorteiles und der Abtriebswelle 4 verbunden ist, und zwar über die Mitnehmerscheibe 14, mit der Abtriebswelle 4 und dem Zylinderblock 10' bzw. bei Fig. 6 dem Innenrad 45. Wesentlich ist somit, daß der hydraulische Ausgang des Pumpenteiles mit dem hydraulischen Eingang des Motorteiles möglichst direkt verbunden ist.

Da bei diesen Ausführungsbeispielen die Kupplungsfunktion integriert ist und das Getriebe direkt dem jeweiligen Motor zugeordnet ist, sind in Bezug auf Antriebswelle und Abtriebswelle im nachfolgenden die bei der "Kupplung" verwendeten Bezugszeichen 2 und 4 usw. eingesetzt.

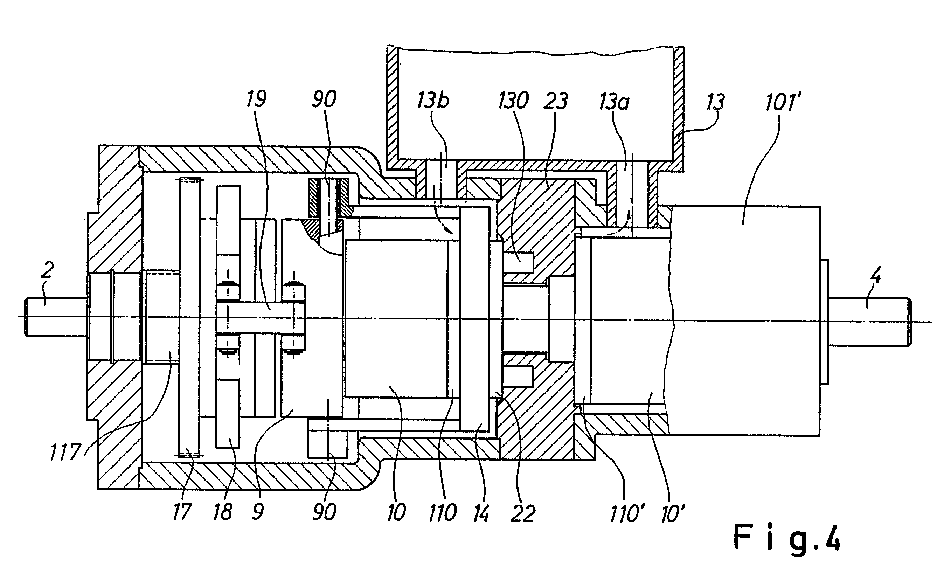

In Fig. 3 und 4 ist eine Axialkolbenpumpe mit einem Axialkolbenmotor kombiniert. Die Antriebswelle 2 ist drehfest, wie beim Ausführungsbeispiel der Kupplung in Figur 2, mit dem Zylinderblock 10 verbunden. Wird die Antriebswelle 2 somit angetrieben, wird auch der Zylinderblock 10 mitgenommen und die im Zylinderblock 10 verschiebbar angeordneten Kolben 11 werden ebenfalls mitgenommen. Diese stützen sich über ihre Gleitblöcke 111 und eine Gleitscheibe 211 wieder auf einem Gleit-, Führungs- und Druckelement 9 ab, das aber im vorliegenden Ausführungsbei spiel einstellbar und nicht festes Teil des Pumpengehäuses ist. Diese Gleit-, Führungs- und Druckelement 9 ist beim dargestellten Ausführungsbeispiel als Schwenkronde ausgebildet. Wenn diese Schwenkronde schräg gestellt ist, können die Kolben 11 während der Drehung der Antriebswelle 2, Hubbewegungen ausführen. Die dargestellte Stellung auf der Antriebsseite in Figur 3 ist die neutrale Stellung.

Das Gleit-, Führungs- und Druckelement 9 ist über eine Servoverstellung 7b (die hier keine Servoventilverstellung ist) einstellbar. Diese bewegt über eine Welle 15 ein Ritzel 16, das in einem Zahnrad 17 kämmt, das koaxial zu der Antriebswelle 2 liegt. Da das Zahnrad 17 mit seinem Innengewinde auf einem Gewindestück 117 aufsitzt, verändert sich seine Stellung ,so daß die Drehung des Zahnrades 17 in eine Axialbewegung umgesetzt wird, welche über eine Scheibe 18 und einen Hebel 19 das als Schwenkronde ausgebildete Gleit-, Führungs- und Druckelement 9 einseitig mitnimmt und verschwenkt.

Bei dem dargestellten Ausführungsbeispiel wird der Zylinderblock 10 stirnseitig durch eine 1. Ventilplatte 110 abgedeckt, die durch ihre Öffnungen 110a oder Bohrungen 110b den Druckmittelfluß steuert, und zwar einerseits durch die Seitenöffnung 110a das Druckmittel den Kolben zuführt und somit den Seitenzufluß gewährleistet und andererseits durch eine Bohrung 110b über die Mitnehmerscheibe 14, sowie eine weitere Ventilplatte 22, den Zufluß zum Ringkanal 130 öffnet und damit über einen Kanal 20 den Zufluß zu einer Druckkammer 21 eines Druckbegrenzungsventiles 25 ermöglicht.

Spiegelbildlich gegenüberliegend ist bei der Getriebeausbildung eine 2. Pumpe 101' mit Zylinderblock 10' vorgesehen, mit Kolben 11', einer zweiten Ventilplatte 110' mit Ventilöffnungen als Seitenöffnung 110a und Bohrungen 110b in Verbindung stehend mit einem Kanal 130'. Die Kolben 11' stützen sich über ihre Gleitblöcke 111' auf einer Gleitscheibe 211' ab. Der Zylinderblock 10' ist fest mit der Ausgangswelle 4 verbunden. Diese Welle 4 ist drehbar im Pumpengehäuse 101' gelagert, zwischen beiden Axialkolbeneinheiten liegt über die Mitnehmerscheibe 14 und Ventilplatte 22 verbunden, eine die Kanäle aufnehmende Scheibe 23. Beide Pumpen sind evtl. durch andere Kolbenpumpen oder Zahnradpumpen ersetzbar.

In der Vorrichtung ist die Steuerung 8 wieder über Leitungen mit den einzelnen Abtastelementen verbunden. Von der Antriebswelle 2 mit ihrem Drehzahlmesser 201 ausgehend, liegt die Leitung 200 die zur Steuerung führt. Bei der Ausgangswelle 4 liegt der Drehzahlmesser 401, der über seine Leitung 400 die Ausgangsdrehzahl in die Steuerung eingibt, der Druckmesser 301 gibt über seine Leitung 300 seine Werte ebenfalls in die Steuerung 8. Diese ist ihrerseits mit einer Ausgangsleitung 800 mit der Servoverstellung 7b verbunden, die eine Rückmeldung ihrer Stellung über die Leitung 700 gibt. Die Servoverstellung 7b kann die Stellung des Gleit-, Führungs- und Druckelementes 9 in die Steuerung 8 eingeben.

In Figur 4 ist eine andere Ansicht der Ausbildung nach Figur 3 dargestellt und zwar ein Vertikalschnitt. Außer den bereits beschriebenen Teilen, ist hier noch der Ölbehälter 13 zu sehen mit seinem Druckmittelzuflußrohrstutzen 13a und Abflußrohrstutzen 13b; ferner ist die Schwenkachse 90' bzw. das zugehörige Schwenklager 90 für das einstellbare Gleit-, Führungs und Druckelement 9 zu sehen.

Die Wirkungsweise der Vorrichtung nach Fig. 3 und 4 ist folgende:

Da die Antriebswelle 2 drehfest mit dem Zylinderblock 10 verbunden ist, wird dieser mitgedreht, wenn die Antriebswelle 2 angetrieben wird. Der Zylinderblock 10 verschiebt die Kolben 11, die mitgenommen werden dadurch, daß sie über ihre Gleitblöcke 111 und die Gleitscheibe 211 auf dem Gleit-, Führungs- und Druckelement 9, das als Schwenkronde ausgebildet ist, abgestützt sind, wenn die Schwenkronde in einer Schrägstellung steht. Während der Drehung werden somit bei Schrägstellung des Gleit-, Führungs- und Druckelementes 9 Hubbewegungen ausgeführt. Das Druckmittel wird aus dem Ölbehälter 13 durch die 1. Ventilplatte 110 zu den Zylindern gebracht und von den Kolben 11 wieder durch die Ventilplatte 110, die Mitnehmerscheibe 14 und eine weitere Ventilscheibe 22, dem Ringkanal 130 zugeführt. Von hier aus geht das Druckmittel weiter in den Kanal 20, die Druckkammer 21, den Kanal 20', den weiterführenden Kanal 130', der hier nicht als Ringkanal ausgebildet ist, ferner die zweite Ventilplatte 110' in die Zylinder des Motorteiles. Das hineindrückende Öl oder dgl. bewirkt eine Kraft auf die Kolben 11' die über ihre Gleitblöcke 111' auf der schräggestellten Gleitscheibe 211' abgestützt sind.

Durch das Zusammenspiel beider Pumpen 101 und 101' können diese eine Drehbewegung auf der Abtriebsseite erzeugen, wobei die erste Pumpe den zweiten Zylinderblock 10' in dem die Kolben 11' verschiebbar angeordnet sind und die drehfest mit dem Zylinderblock 10' verbundene Abtriebswelle 4 über die Mitnehmerscheibe 14 mitnimmt. Das Druckmittel wird dabei in den Ölbehälter 13 zurückbefördert.

Die Vorrichtung arbeitet in seinen Variationen wie folgt:

Es wird zunächst angenommen, daß die Antriebswelle 2 gedreht wird, aber der Drehung der Abtriebswelle 4 Widerstand entgegen gesetzt wird. Wird die Antriebswelle 2 bei der dargestellten Stellung des Gleit-, Führungs- und Druckelementes 9, das in Neutralposition steht, gedreht, wird nur der Zylinderblock 10 mitgenommen, genauso wie seine Kolben 11. Da die Kolben 11 in dieser Position keine Hubbewegungen ausführen können, kann kein Volumenstrom entstehen und demzufolge auch keine hydrostatischer Druck aufgebaut werden. Zum Drehen der Antriebswelle 2 ist somit nur ein minimales Drehmoment zur Überwindung der Reibung notwendig. Das Getriebe ist praktisch ausgekuppelt und in Lehrlauf.

Wird das Gleit-, Führungs- und Druckelement 9 aber verschwenkt und zwar durch die Servoverstellung 7b, führen die Kolben 11 bei Drehung der Antriebswelle 2, Hubbewegungen aus. Sie drücken also das Druckmittel, z.B. Öl durch die Ventilplatte 110, die Mitnehmerscheibe 14, die weitere Ventilscheibe 22 und durch die, die Kanäle aufnehmende Scheibe 23 sowie die zweite seitlich liegende Ventilplatte 110' und somit durch die Kanäle 130, 20, 21, 20', 130', vor die Kolben 11'. Zum Aufbau des hydrostatischen Druckes zwischen den Kolben 11 und den Kolben 11' ist ein Drehmoment an der Antriebswelle 2 notwendig. Dieses wirkt über den Zylinderblock 10, die Kolben 11, die Gleitblöcke 111 und die Gleitscheibe 211 auch auf das Gleit-, Führungs- und Druckelement 9. Von diesem wird dieses Drehmoment direkt auf die Mitnehmerscheibe 14 und die mit dieser verbundenen Abtriebswelle 4 übertragen.

Gleichzeitig bewirkt der auf die Kolben 11' wirkende hydrostatische Druck in beschriebener Weise ebenfalls ein Drehmoment an der Abtriebswelle 4. Dieses Drehmoment wird dem direkt auf die Abtriebswelle 4 übertragene Drehmoment überlagert.

Bei nur geringer Schrägstellung des Gleit-, Führungs- und Druckelementes 9 kann bei entsprechendem Drehmoment an der Antriebswelle 2 ein nur kleiner Volumenstrom bei großem hydrostatischen Druck erzeugt werden. Auf die Abtriebswelle 4 kann bei dieser Stellung des Druckelementes 9 ein sehr großes Drehmoment bei sehr geringer Drehgeschwindigkeit übertragbar sein.

Bei größerer Schrägstellung des Druckelementes 9 kann bei entsprechendem Drehmoment an der Antriebswelle 2, ein größerer Volumenstrom bei geringem hydrostatischen Druck erzeugt werden. Auf der Abtriebswelle 4 kann bei dieser Stellung des Druckelementes 9 ein geringeres Drehmoment bei größerer Drehgeschwindigkeit übertragen werden.

Um die Vorrichtung sicher zu machen, ist ein Druckbegrenzungsventil 25 vorgesehen, von dem der Druck vom Druckmesser 301 gemessen der Steuerung 8 zugeführt wird.

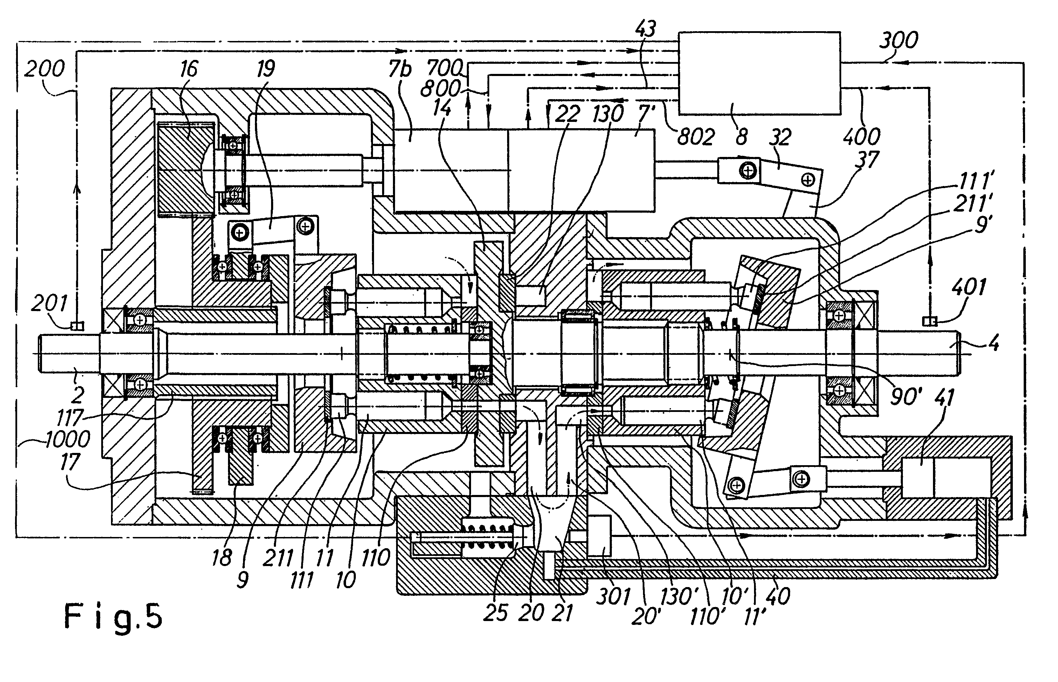

Gegenüber der beschriebenen Kupplung in Fig. 2 arbeitet die Servoverstellung nicht mit einem Ventil zusammen, sondern im vorliegenden Fall mit den Teilen 15, 16, 17, 18 und 19 als Stellglieder. Dies trifft auch zu auf die Ausführungen nach den Figuren 5 und 6.

In den Ausführungsbeispielen der Figuren 5 und 6 ist der Aufbau der beiden Getrieben im wesentlichen gleich mit dem Aufbau des Getriebes beim Ausführungsbeispiel der Figuren 3 und 4, nur daß die Motorseite jeweils anders ausgebildet ist.

Der Aufbau der Vorrichtungen linksseitig entspricht im wesentlichen dem Ausführungsbeispiel der Figuren 3 und 4. Die Antriebswelle 2 ist mit dem Zylinderblock 10 verbunden, indem die Kolben 11 gleitbar angeordnet sind und zwar als Axialkolben. Ihre Gleitblöcke 111 liegen auf einer Gleitscheibe 211 und diese wiederum auf dem als Schwenkronde ausgebildeten Gleit-, Führungs- und Druckelement 9. Dies ist einstellbar und zwar über den Hebel 19, die von ihm gelenkig angegriffene Scheibe 18, das Zahnrad 17, das auf dem Gewindestück 117 hin- und herbewegt werden kann, angetrieben vom Ritzel 16. Die Einstellung wird gesteuert von der Servoverstellung 7b.

Auch die Ausbildung der Ventilplatte 110, der Mitnehmerscheibe 14, die mit der Abtriebswelle 4 fest verbunden ist, und der Ventilscheibe 22 ist die gleiche wie zu Fig. 3 beschrieben. Der Ringkanal 130, der Kanal 20, das Druckbegrenzungsventil 25 mit Druckkammer 21 und Kanal 20' und einfacher Kanal 130', sowie die Ventilscheibe 110' entsprechen dem vorhergehenden Ausführungsbeispiel der Figuren 3 und 4.

In Figur 5 entspricht die Zuordnung des Zylinderblockes 10' und seiner Kolben 11' dem vorhergehenden Beispiel.

In Figur 5 ist aber eine volumenverstellbare Axialkolbeneinheit im Motorteil eingebaut. Die Gleitblöcke 111' stützen sich auf ein einstellbares Druckelement 9' ab.

Im nachfolgenden wird Figur 5 beschrieben:

Das Gleit-, Führungs- und Druckelement 9' rechtsseitig in der Figur 5 zu sehen, ist einstellbar und ebenfalls als Schwenkronde ausgebildet, wie das Druckelement 9 auf der Antriebsseite. Auch die Überwachung der Vorrichtung von der Steuerung 8 aus, mit Drehzahlmeßgerät 201 und Leitung 200 zur Steuerung auf der Antriebsseite und Drehzahlmeßgerät 401 sowie Leitung 400 auf der Abtriebsseite, der Leitung 700 von der Servoverstellung 7b zur Steuerung gehend und der Leitung 800 von der Steuerung 8 zur Servoverstellung 7b hingehend, ist nicht unterschiedlich zum vorhergehenden Ausführungsbeispiel. Der Druckmesser 301 der hier, wie beim vorhergehenden Ausführungsbeispiel, am Druckbegrenzungsventil 25 angreift, gibt seine Werte über die Leitung 300 zur Steuerung 8. Es ist aber eine zweite Servoverstellvorrichtung 7' vorgesehen, die über Leitung 702 ihre Werte in die Steuerung eingibt und ihre Einstellungsbefehle über eine Leitung 802 von der Steuerung 8 erhält. Diese zweite Vorrichtung 7' beeinflußt das Gleit-, Führungs- und Druckelement 9' auf der Motorseite in seiner Stellung.

Es ist wichtig, daß der hydraulische Ausgang der Pumpe mit dem hydraulischen Eingang des Motors möglichst direkt verbunden ist. Zwischengeschaltet sind nur die für die Volumenstromsteuerung unbedingt notwendigen Ventilplatten, und wichtig die Möglichkeit den Innendruck zu messen und ein Druckbegrenzungsventil 25 anzubringen. Durch die Ausbildung der elektronischen Überwachung und Steuerung, werden für die jeweilige Antriebssituation wichtigen Parameter wie Antriebsdrehgeschwindigkeit, Abtriebsdrehgeschwindigkeit, Innendruck, Förder- bzw. Schluckvolumen und Pumpe, bzw. Pumpe und Motor gemessen und der elektronischen Steuerung 8 zugeführt, die diese Werte verarbeitet und entsprechende Verstellbefehle an die Servoverstellungen 7b und 7' abgibt. Das Bestreben geht dabei dahin, den Hydraulikanteil so gering wie möglich zu halten, das heißt, die Verstellung der beiden Teile nämlich der Kolbenpumpe 101 und des Kolbenmotors 101' so vorzunehmen, daß möglichst wenig Schluckvolumen bewegt wird, um das Drehmoment von der Antriebswelle 2 auf die Abtriebswelle 4 zu übertragen. Die Vorrichtung arbeitet somit in bestimmter Position, bei der das Druckelement 9 auf der Antriebsseite schräg steht und das Druckelement 9' auf der Abtriebsseite in O-Stellung steht, ähnlich einer starren Welle. Bei geringer Verstellung des Gleit-, Führungs- und Druckelementes 9 auf der Eingangsseite wird mit hohem Druck gearbeitet. Bei Geradestellung beider Druckelemente 9,9' ist das Getriebe wirkungslos in Bezug auf den Antrieb.

Die Vorrichtung hat somit zwei Servoverstellvorrichtungen 7b und 7', wobei die Servoverstellvorrichtung 7b die Verschwenkung der Schwenkkronde und somit des Gleit-, Führungs-und Druckelementes 9 in der zu Figur 3 beschriebenen Weise vornimmt.

Die Servoverstellvorrichtung 7' greift über einen Hebel 38, einen Verstellhebel 37 an, der die Schwenkachse wiederum angreift des als Schwenkkronde ausgebildeten Gleit-, Führungs-und Druckelementes 9'. Die Verschwenkung wird unterstützt von einem Servozylinder 41 aus, der über eine Druckleitung 40 mit der Druckkammer 21 des Druckbegrenzungsventiles 25 verbunden ist. Der Druckkammer 21 ist der Druckmesser 301 zugeordnet der über Leitung 300 mit der Steuerung 8 verbunden ist.

Beide Schwenkronden 9,9' des Ausführungsbeispieles der Figur 5 sind somit derart ausgebildet und gelagert, wie es in Figur 4 gezeigt ist, mit ihrer Schwenkwelle 90' im Achslager 90.

Bei beiden Ausführungsbeispielen der Figuren 5 und 6 weist die Vorrichtung ebenfalls wie in Figur 4 gezeigt, einen Druckmittelbehälter oder Ölbehälter 13 auf, mit Ausgangsöffnung 13b und Eingangsöffnung 13a. Die Zu- und Abfuhr des Druckmittels ist beliebig, kann aber der Ausbildung der Figur 4 entsprechen, mit stutzenartigen Ausgangs- und Eingangsöffnungen. Dies ist in den Schnitten der Figuren 5 und 6 nicht gezeigt.

In Figur 6 ist eine Ausbildung gezeigt, die statt des Gleit-, Führungs- und Druckelementes 9' und statt der Axialkolbeneinheit, eine Vorrichtung aufweist die als Zahnradpumpe wirkt. Diese Vorrichtung hat ein Innenrad 45 und Außenrad 46, wobei dieser Zahnradpumpe eine Dichtplatte 47 vorgesetzt ist. Bei diesem Ausführungsbeispiel ist nur eine Servoverstellvorrichtung 7b notwendig die das auf der Antriebsseite vorhandene Gleit-, Führungs-und Druckelement 9 beeinflußt. Die Stellung der Zahnradpumpe braucht bei diesem Ausführungsbeispiel nicht extra abgefragt zu werden und hat somit auf die Steuerung keinen Einfluß, der Drehzahlmesser 401 gibt über die Leitung 400 aber die Abtriebsdrehzahl in die Steuerung ein. Die übrige Ausbildung der Vorrichtung nach Figur 6 entspricht dem Ausführungsbeispiel der Figur 5.

Wie aus den Figuren ersichtlich, läßt sich der Grundgedanke der Erfindung vielfach variieren und kann je nach Einsatzzweck auch abgewandelt werden.

Die erheblichten Vorteile sind darin zu sehen, daß sich die Kupplung und auch die Getriebe automatisch über die Steuerung exakt auf die jeweils vorhandenen Verhältnisse einstellen, wodurch nicht nur Kraftstoff gespart wird, sondern auch die ganzen Schalt- und Kupplungsvorgänge flüssiger erfolgen, wodurch auch die Lebensdauer der Vorrichtungen erheblich gesteigert werden. Statt Achsialkolbenpumpen können auch Radialkolbenpumpen eingesetzt werden, was aber aufwendiger ist.

Die geoffenbarten Merkmale einzeln und in Kombination werden soweit sie gegenüber dem Stand der Technik neu sind als erfindungswesentlich angesehen.

## Ansprüche

1. Hydromechanische Antriebsübertragungsvorrichtung wie Kupplung, Getriebe oder dgl., mit mindestens einer Kolbenpumpe, **dadurch gekennzeichnet**, daß der Vorrichtung eine zentrale Steuerung (8) zugeordnet ist, die über Eingangsleitung (200,400) die Drehgeschwindigkeiten der Antriebswelle (2) und/oder der Ausgangswelle (4) und über Leitungen (700,702), die Stellung eines oder mehrerer den hydraulischen Druck oder Fluß steuernde Stellglieder bzw. ihrer Servoverstellvorrichtungen (7,7a,7b,7') eingebbar sind und über ein oder mehrere Ausgangsleitungen (800,802) Steuerbefehle zum bzw. zu den Stellgliedern (7,7a,7b,7') ausgebbar sind.

2. Vorrichtung nach Anspruch 1, **dadurch gekennzeichnet**, daß die Steuerung als elektronisch arbeitende Steuerung (8) ausgebildet ist.

3. Vorrichtung nach Anspruch 1 und 2, **dadurch gekennzeichnet**, daß die an die Steuerung (8) angeschlossene Servoverstellvorrichtung als Servoventilverstellvorrichtung (7b) ausgebildet ist, die den Durchtrittsquerschnitt eines zugeordneten als Ventil ausgebildeten Stellgliedes (7a) bestimmt, und ihre Stellwerte über eine Leitung (700) an die Steuerung (8) abgibt und durch die Steuerung (8) über eine Leitung (800) beeinflußbar ist.

4. Vorrichtung nach einem oder mehreren der Ansprüche 1 bis 3, **dadurch gekennzeichnet**, daß über eine Servoverstellvorrichtung eine der Eingangswelle (2) und/oder der Ausgangswelle (4) zugeordnete Kolbenpumpe direkt oder über Zwischenglieder einstellbar bzw. beeinflußbar ist.

5. Vorrichtung nach einem oder mehreren der Ansprüche 1 bis 4, **dadurch gekennzeichnet**, daß zwei Kolbenpumpen (101,101') vorgesehen sind, die antriebs- und abtriebsseitig liegen und gesondert über Servoverstellvorrichtungen (7b,7') beeinflußbar und beide Servoverstellvorrichtungen (7b,7') an eine gemeinsame zentrale Steuerung (8) angeschlossen sind.

6. Vorrichtung nach einem oder mehreren der Ansprüche 1 bis 5, **dadurch gekennzeichnet**, daß mindestens eine Servoverstellvorrichtung (7b,7') mit dem zugeordneten Verstellmechanismus eines Gleit-, Führungs- und Druckelementes (9,9') verbunden ist, und die Stellung desselben bestimmt.

7. Vorrichtung insbesondere nach einem oder mehreren der Ansprüche 1 bis 6, **dadurch gekennzeichnet**, daß sie eine Kolbenpumpe (101) aufweist, deren Zylinderblock (10) mit der Antriebswelle (2) verbunden ist, deren Gleit-, Führungs- und Druckelement (9) in einem umlaufenden Pumpengehäuse (10a) gelagert ist, das seinerseits mit einer den Durchfluß des hydraulischen Mittels zur Ausgangsseite hin ermöglichenden Mitnehmerscheibe (14) als Steuerteil versehen ist, das seinerseits mit der Ausgangswelle (4) verbunden ist und das umlaufende Pumpengehäuse (10a) in einem Kupplungsgehäuse (30) liegt, wobei das Druckmittel über das Ventil als Stellglied (7a) geführt ist, und das Ventil und/oder die zugehörige Servoventilverstellung (7b) über Leitungen (700,800) mit der Steuerung (8) verbunden ist.

8. Vorrichtung nach einem oder mehreren der Ansprüche 1 bis 7, **dadurch gekennzeichnet**, daß sie ein oder mehrere Kolbenpumpen aufweist, die als Axialkolbenpumpen ausgebildet sind.

9. Vorrichtung nach einem oder mehreren der Ansprüche 1 bis 8, **dadurch gekennzeichnet**, daß die Mitnehmerscheibe (14) von einem Ringkanal (130) umgriffen ist, der im Kupplungsgehäuse (30) liegt, wobei Öffnungen (114) in der Mitnehmerscheibe (14), sowie der Ringkanal (130) und Öffnungen (131) im Kupplungsgehäuse (30) den Zugang zum als Stellglied arbeitenden Ventil (7a) bilden, wobei die Stellung des Ventiles (7a) den Zuflußquerschnitt zum Ölbehälter (13) bestimmt.

10. Vorrichtung nach einem oder mehreren der Ansprüche 1 bis 9, **dadurch gekennzeichnet**, daß der Mitnehmerscheibe (14), antriebsseitig vorgeordnet eine Ventilplatte (110) als Zwischenglied zum Zylinderblock (10) vorgesehen ist.

11. Vorrichtung insbesondere nach einem oder mehreren der Ansprüche 1 bis 10, **dadurch gekennzeichnet**, daß die Vorrichtung als Kupplung ausgebildet ist, wobei der Zylinderblock (10) mit seiner Antriebswelle (2) in einem das Gleit-, Führungs- und Druckelement (9) tragenden umlaufenden Pumpengehäuse (10a) und einem das Pumpengehäuse (10a) umgreifenden Kupplungsgehäuse (30) gelagert ist und der hydraulische Kreislauf durch das Kupplungsgehäuse (30) und das umlaufende Pumpengehäuse (10a) und die als Steuerteil arbeitende mit der Ausgangswelle (4) verbundene Mitnehmerscheibe (14) sowie durch ein Ventil (7a) als Stellglied steuerbar ist.

12. Vorrichtung insbesondere nach einem oder mehreren der Ansprüche 1 bis 11, **dadurch gekennzeichnet**, daß die Vorrichtung als Getriebe ausgebildet ist, wobei auf der Antriebsseite die Antriebswelle (2) fest mit Zylinderblock (10) einer Axialkolbenpumpe verbunden ist, deren Gleit-, Führungs-und Druckelement (9) als einstellbare Schwenkronde ausgebildet ist, deren Verstellmechanismus (16,17,18,19) mit der Servoverstellung (7b) verbunden ist, die ihrerseits von der Steuerung (8) beeinflußbar ist und abtriebsseitig ebenfalls eine Axialkolbenpumpe vorgesehen ist, deren Zylinderblock (10') mit der Abtriebswelle (4) fest verbunden ist, wobei der Zylinderblock (10') drehbar in einem das zugeordnete Gleit-, Führungs-und Druckelement für die Kolben (11') aufnehmenden, nicht drehbaren Gehäuseteil liegt und zwischen beiden Pumpenbereichen der Kolbenpumpe (101) und der Kolbenpumpe (101'), als zweite Pumpe, eine die Zwischenkanäle tragende Scheibe (23) vorgesehen ist.

13. Vorrichtung nach einem oder mehreren der Ansprüche 1 bis 12, **dadurch gekennzeichnet**, daß die Scheibe (23) rechts und links jeweils mit Ventilscheiben (22) und (110') abgedeckt ist, wobei der Ventilscheibe (22) zur Antriebsseite hin vorgeordnet die Mitnehmerscheibe (14) liegt, die mit der Ausgangswelle (4) fest verbunden ist.

14. Vorrichtung nach einem oder mehreren der Ansprüche 1 bis 13, **dadurch gekennzeichnet**, daß der Scheibe (23) mit ihren Kanalführungen zugeordnet ein die Antriebs- und die Abtriebsseite verbindendes Druckbegrenzungsventil (5) vorgesehen ist, das eine Druckkammer aufweist, wobei der Druck in der Druckkammer (21) über einen Druckmesser (301) mit der Steuerung (8) verbunden ist.

15. Vorrichtung nach einem der mehreren der Ansprüche 1 bis 14, **dadurch gekennzeichnet,** daß die Vorrichtung als Getriebe ausgebildet ist und sowohl antriebsseitig als auch abtriebsseitig jeweils einstellbare Gleit-, Führungs- und Druckelemente (9,9') aufweist, die über Servoverstellungen (7b,7') in ihrer Stellung von der Steuerung (8) beeinflußbar sind.

16. Vorrichtung nach einem oder mehreren der Ansprüche 1 bis 15, **dadurch gekennzeichnet,** daß beide Gleit-, Führungs- und Druckelemente als Schwenkronden ausgebildet sind.

17. Vorrichtung nach einem oder mehreren der Ansprüche 1 bis 16, **dadurch gekennzeichnet,** daß die Servoverstellvorichtungen (7b,7') über Getriebeelemente wie Zahnräder und/oder Hebelelemente die als Schwenkronde ausgebildeten Gleit-, Führungs-und Druckelemente (9,9') angreifen wobei beide Servoverstellvorrichtungen getrennt voneinander und nur über die Steuerung (8) miteinander verbunden sind.

18. Vorrichtung nach einem oder mehreren der Ansprüche 1 bis 17, **dadurch gekennzeichnet,** daß Antriebswelle (2) und Abtriebswelle (4) gleichachsig zueinander liegen.

19. Vorrichtung nach einem oder mehreren der Ansprüche 1 bis 18, **dadurch gekennzeichnet,** daß die Vorrichtung an- oder abtriebsseitig mit einer Axialkolbeneinheit mit einstellbarem Gleit-, Führungs-und Druckelement (9) versehen ist, das über eine Servoverstellung (7b) beeinflußbar ist, und ab- bzw. antriebsseitig als Pumpe eine Zahnradpumpe aufweist.

Fig.1

Fig.2

EP 0 320 857 A2

Fig.3

Fig.4

EP 0 320 857 A2

Fig.5

Fig.6